# EUROPÄISCHE PATENTSCHRIFT

(11) **EP 0 615 955 B1**
(45) Veröffentlichungstag und Bekanntmachung des Hinweises auf die Patenterteilung: **13.08.1997**
(21) Anmeldenummer: 94102123.0
(22) Anmeldetag: 11.02.1994
(51) Int. Cl.: C01B 33/36, C11D 3/12

(54) **Verfahren zur Herstellung von Gemischen aus synthetischem, kristallinem Magadiit und sauerstoffabspaltenden Salzen sowie deren Verwendung**
Process for the preparation of mixtures of synthetic crystalline magadiite and oxygen releasing salts and use thereof
Procédé de préparation de mélanges de magadiite cristalline synthétique et de sels libérant de l'oxygène ainsi que leur utilisation

(30) Priorität: 13.03.1993 DE 4308063
(43) Veröffentlichungstag der Anmeldung: 21.09.1994
(73) Patentinhaber: HOECHST AKTIENGESELLSCHAFT, 65926 Frankfurt am Main (DE)
(72) Erfinder: Bauer, Harald, Dr., D-65439 Flörsheim (DE)

(56) Entgegenhaltungen:
- EP-A- 0 175 287
- EP-A- 0 205 070
- EP-A- 0 472 144
- DD-A- 220 326
- DD-A- 234 878
- SEIFEN - öLE - FETTE - WACHSE, Bd.15, Nr.113, 1987 Seiten 555 - 561 K. H. BERGK

## Beschreibung

Die Erfindung betrifft ein Verfahren zur Herstellung von Gemischen aus synthetischem, kristallinem Magadiit und sauerstoffabspaltenden Salzen sowie deren Verwendung.

Magadiit kommt mineralisch vor. EUGSTER entdeckte es erstmals im Bett des Sees Magadi in Kenya (Science 157 (1967) 1177 - 1180). Er identifizierte es als ein aluminiumfreies Natriumsilikathydrat mit Schichtstruktur und der Zusammensetzung Na₂O . 14 SiO₂ . 9 H₂O.

LAGALY synthetisierte Magadiit gemäß einem Verfahren, welches in Am. Mineral. 60, 642 - 649 (1975) beschrieben ist. Magadiit wurde hierbei aus Reaktionsmischungen der molaren Zusammensetzung 1 Na₂O : 9 SiO₂ : 75 H₂O nach einer Kristallisationszeit von 28 Tagen erhalten. Zur Herstellung der Reaktionsmischung wird Natronlauge einer 80 gewichts%igen Kieselsäure bis zur gewünschten Zusammensetzung zugesetzt.

Nachteilig für dieses Herstellverfahren ist die geringe Raum-Zeit-Ausbeute, die insbesondere aus der langen Kristallisationszeit resultiert.

Nachteilig ist weiter die Einstellung des molaren Verhältnisses SiO₂ : Na₂O in der Reaktionsmischung durch Mischen von Alkalilauge, Alkalicarbonat oder Alkaliwasserglas mit gefällter Kieselsäure, weil diese aus Alkaliwasserglas hergestellt wird. Bei der dazu üblichen Herstellung aus Alkaliwasserglas mit Mineralsäure fallen nicht weiter verwertbare, abwasserbelastende Mineralsäuresalze an.

Die EP-A-0 205 070 beschreibt ein Verfahren zur Herstellung von u.a. Magadiit, bei dem man eine wäßrige Lösung von Alkalisilikat oder eine Aufschlämmung von amorphem Alkalisilikat mit einem Molverhältnis M₂O (nicht neutralisiert)/SiO₂, wobei M für Alkalimetall steht, von 0,05 : 1 bis 0,8 : 1, bei Temperaturen von 70 bis 250 °C hält und diese Reaktionsmischung solange reagieren läßt bis das Alkalischichtsilikat auskristallisiert, dadurch gekennzeichnet, daß man nach dem Beginn der Kristallisation eine saure Verbindung in einer solchen Menge zusetzt, daß ständig in der Mutterlauge einer abfiltrierten Probe ein Verhältnis von M₂O/SiO₂ von 0,05 : 1 bis 0,8 : 1 eingehalten wird. Nach diesem Verfahren erhält man Magadiit durch die beschriebene Teilneutralisation von Wasserglas bei hydrothermalen Bedingungen in Gegenwart von Impfkristallen.

K.-H. Bergh et al. beschrieben in 'Seifen, Öle, Fette' 113 (1987), S. 555 ff, daß Magadiit teilweise Phosphate in Waschmitteln ersetzen kann und daß Magadiit die Lagerstabilität von Percarbonaten in percarbonathaltigen Waschmitteln nicht negativ beeinflußt, d.h. daß solche Waschmittel lagerstabil sind.

Kristalline Schichtsilikate, zu denen der Magadiit zählt, wirken als Ionenaustauscher und werden Waschmitteln als Enthärter zugesetzt. Waschmittel enthalten oft Peroxide als Bleich-, Oxidations- und Desinfektionsmittel. Bei der Lagerung des Waschmittels kommt es zu einem unerwünschten Peroxidabbau.

Es war daher die Aufgabe gestellt, ein Verfahren zur Herstellung von Gemischen aus synthetischem, kristallinem Magadiit und sauerstoffabspaltenden Salzen zu finden, bei dem keine Salzbildung zu einer unerwünschten Abwasserbelastung führt, das auf preiswerten Ausgangssubstanzen basiert, mit guten Raum-Zeit-Ausbeuten arbeitet und bei dem nur eine geringe Peroxidzersetzung eintritt.

Das wird erfindungsgemäß dadurch erreicht, daß man bei der Herstellung eines Gemisches aus Magadiit und sauerstoffabspaltendan Salzen 1 Mol Natronwasserglas, welches ein molares Verhältnis von SiO₂ : Na₂O = 1 : (0,25 bis 0,5) hat, mit 0,1 bis 0,9 Mol einer Peroxidsalz bildenden Verbindung, welche in molarer wäßriger Konzentration einen pH-Wert von kleiner als 1o,5 hat, als Neutralisationsmittel vermischt und in Gegenwart von Magadiit-Impfkristallen bei Temperaturen von 373 bis 523 K, insbesondere 423 bis 463 K im Autoklaven 1 bis 15 Stunden lang erhitzt, und nach dem Abkühlen 0,15 bis 1,5 Mol Wasserstoffperoxid, bezogen auf 1 Mol eingesetztes Natronwasserglas, zugibt und aus der Reaktionssuspension den Feststoff und die gelosten Stoffe als Trockensubstanz isoliert.

Das Verfahren gemäß der Erfindung kann weiterhin wahlweise auch noch dadurch ausgestaltet sein, daß man
a) als Neutralisationsmittel Peroxidsalze bildende Verbindungen wie Phosphorsäure, Borsäure, Kieselsäure, Kohlendioxid, Alkalihydrogencarbonat, Alkalihydrogenphosphat oder Natriumtetraborat verwendet;
b) die Menge an Neutralisationsmittel so dosiert, daß in der Reaktionslösung ein Verhältnis von SiO₂ : Na₂O = (4 bis 15) : 1 vorliegt;
c) das Wasserstoffperoxid in Form einer 5 bis 75 gewichts%igen wäßrigen Lösung zugibt;
d) 0,5 bis 10 Gew% Impfkristalle, bezogen auf den SiO₂-Gewichtsanteil im Natronwasserglas, zugibt;
e) die Umsetzung im Autoklaven bei einem molaren Verhältnis von SiO₂ : H₂O = 1 : (5 bis 100) durchführt;
f) die Reaktion in Gegenwart von Aluminium-, Phosphor-, Bor- und/oder Schwermetall-Verbindungen, wie beispielsweise Eisen durchführt;
g) die Reaktionsmischung vor dem Erhitzen auf einen pH-Wert von 9 bis 12 einstellt;
h) die Reaktion kontinuierlich durchführt;
i) bei der kontinuierlichen Arbeitsweise 5 bis 30 Gew% Impfkristalle, bezogen auf den SiO₂-Gewichtsanteil im Natronwasserglas, zugibt;
j) der Reaktionssuspension peroxidstabilisierende Verbindungen wie beispielsweise Magnesiumsilikat, Ethylendiamintetraessigsäure, Tripolyphosphor-, Pyrophosphor- oder Orthophosphorsäure jeweils in Form ihrer Natriumsalze zugibt;
k) den Feststoff und die in der Reaktionssuspension gelösten Stoffe durch eine Unterdruckverdampfung als Trockensubstanz isoliert;
l) die Reaktionssuspension mit einem erwärmten Gasstrom bei einer Feststofftemperatur zwischen 3o3 und 363 K beispielsweise in einem Wirbelbetttrockner, Trommeltrockner, Sprühtrockner oder Granulator als Trockensubstanz isoliert;
m) die Reaktionssuspension in einen Filterkuchen und Filtrat trennt und getrennt trocknet und die erhaltenen Trockenstoffe miteinander vermischt;
n) einen Teil des Wasserstoffperoxids dem Filtrat zusetzt, zur Trockene eindampft und in zerkleinerter Form mit dem getrockneten Filterkuchen vereinigt;
o) 1 Mol Natronwasserglas, welches ein molares Verhältnis von SiO₂ : Na₂O = 1 : (o,25 bis o,5) hat, mit o,1 bis o,9 Mol einer Verbindung, welche in molarer wäßriger Konzentration einen pH-Wert von kleiner als 1o,5 hat, als Neutralisationsmittel vermischt und in Gegenwart von Magadiit-Impfkristallen bei Temperaturen von 373 bis 523 K, insbesondere 423 bis 463 K, im Autoklaven 1 bis 15 Stunden lang erhitzt und, in Abänderung des Patentanspruchs 1, die Trockensubstanz isoliert und zu dieser Trockensubstanz o,15 bis 1,5 Mol Wasserstoffperoxid, bezogen auf 1 Mol eingesetztes Natronwasserglas, zugibt.

Das nach dem erfindungsgemäßen Verfahren hergestellte Gemisch kann man zum Waschen, Reinigen, Bleichen oder Spülen von Textilien oder Geschirr allein oder zusammen mit üblichen Hilfsstoffen wie beispielsweise Tenside, Zeolithe, Tripolyphosphate, Gerüststoffe oder Oxicarboxylate einsetzen.

Für die Synthese von Magadiit werden bei Reaktionstemperaturen von 433 bis 463 K Reaktionszeiten von maximal 15 Stunden benötigt.

Die Zugabe von Impfkristallen ist von wesentlichem Einfluß auf die Art der auskristallisierenden Schichtsilikate und die Reaktionszeiten. Magadiit entsteht jedoch auch, in verminderter Reinheit, bei längeren Reaktionszeiten ohne Zugabe von Impfkristallen. Es ist selbstverständlich, daß auch das fertige Salzgemisch oder die Suspension als Impfkristall zugesetzt werden können.

Es ist für eine kontinuierliche Reaktionsführung vorteilhaft, den Autoklaven nicht vollständig zu entleeren, sondern stets mindestens teilweise mit Produktmischung gefüllt zu halten, die aus dem auskristallisierten Silikat, der Mutterlauge sowie nicht umgesetzten Ausgangsprodukten entsteht. Damit verbleibt ein hoher Anteil an Silikat-Kristallen im Autoklaven, die die weitere Bildung von kristallinem Silikat fördern.

Die Umsetzung der Alkalimetallsalze mit Wasserstoffperoxid kann in demselben Behälter der Schichtsilikatsynthese erfolgen. Es ist dann von Vorteil, die gesamte Reaktionslösung einzudampfen.

Erfindungsgemäß können Gemische erhalten werden, die bis zu 19,6, vorzugsweise bis 13,9 Gew% Peroxid enthalten.

Mit dem erfindungsgemäßen Verfahren entfällt auch die herstellungsbedingte Salzfracht des Abwassers, die aus der Natriumcarbonatperoxohydrat-Herstellung resultiert.

Natriumcarbonatperoxohydrat, welches als Bleich-, Oxidations- und Desinfektionsmittel Verwendung findet, wird aus wäßrigen Lösungen von Natriumcarbonat und Wasserstoffperoxid erhalten, wobei Natriumchlorid, Natriumpolyphosphate oder Polyacrylate als Aussalz- und Kristallisationshilfsmittel dienen (vgl. "Ullmanns Encyklopädie der technischen Chemie", 4. Auflage, Band 17, Seiten 724/725).

Die guten Eigenschaften des erfindungsgemäßen Gemisches beruhen einerseits auf der Ionenaustauschfähigkeit des Magadiits, wodurch die Härtebildner des Waschwassers nicht ausfallen, andererseits, wegen der deutlich geringeren Alkalität, auf einer deutlichen Lagerstabilisierung des Peroxidgehaltes.

Bei Produkten, welche nach der wahlweisen Ausgestaltung o) hergestellt werden, liegt eine geringere Lagerstabilität des Peroxids vor.

Die Erfindung wird anhand der Beispiele näher erläutert.

### Beispiel 1

966 g Reaktionsmischung der molaren Zusammensetzung 0,311 Na₂O : 0,0054 Al₂O₃ : 1 SiO₂ : 32,6 H₂O wird aus 331 Gewichtsteilen Natronwasserglas (26,3 % SiO₂, 8,43 % Na₂O, 0,24 % Al₂O₃) und 635 Gewichtsteilen Wasser hergestellt. Es werden 2 g kristalliner Magadiit aus einem früheren Versuch zugegeben und bei 347 K unter Rühren CO₂ bis zu einem pH-Wert von 10,1 eingeleitet. Die Reaktionsmischung wird unter Rühren in einem Edelstahlautoklaven auf 438 K erhitzt und bei einem Druck von 7 bar 8 Stunden bei diesen Bedingungen gehalten. Nach dem Abkühlen wird die Suspension mit 30 g H₂O₂ (70 gew.-%ig) versetzt und zur Trockene im Vakuum bei 0,5 bis 0,1 bar eingedampft. Man erhält 154,3 g eines Gemisches aus Magadiit und Natriumpercarbonat mit einem Peroxid-Gehalt von 10,29 Gew% (als H₂O₂).

### Beispiel 2

Entsprechend Beispiel 1 wird eine wäßrige Suspension aus Magadiit und Natriumcarbonat aus Natronwasserglas hergestellt. Der Feststoff wird abfiltriert und getrennt bei 383 K getrocknet. Das Filtrat wird mit 30 g H₂O₂ (70 gew.-%ig) versetzt, zur Trockene im Vakuum bei 0,5 bis 0,1 bar eingedampft und zerkleinert. Nach Vermischung der beiden Trockensubstanzen werden 185,3 g eines Gemisches aus Magadiit und Natriumpercarbonat mit einem Peroxid-Gehalt von 11,3 Gew% (als H₂O₂) erhalten.

### Beispiel 3

Entsprechend Beispiel 1 wird die Wasserglaslösung mit Magadiit-Impfkristallen und 30,5g H₃BO₃ hergestellt. Das Reaktionsgemisch wird wie im Beispiel 1 weiterbehandelt. Nach dem Abkühlen wird die Lösung mit 38,1 g H₂O₂ (70 gew%ig) versetzt und zur Trockene eingedampft. Man erhält 18o,85 g eines Gemisches aus Magadiit und Natriumperborat mit einem Peroxid-Gehalt von 14,2 Gew% (als H₂O₂).

### Beispiel 4

Entsprechend Beispiel 1 wird die Wasserglaslösung mit Magadiit-Impfkristallen und 41,3 g NaHCO₃ unter Rühren hergestellt. Das Reaktionsgemisch wird wie im Beispiel 1 weiterbehandelt. Nach dem Abkühlen wird die Lösung mit 58,8 g H₂O₂ (70 gew.-%ig) versetzt und zur Trockene eingedampft. Man erhält 167,2 g eines Gemisches aus Magadiit und Natriumpercarbonat mit einem Peroxid-Gehalt von 7,81 Gew% (als H₂O₂).

## Patentansprüche

1. Verfahren zur Herstellung von Gemischen aus synthetischem, kristallinem Magadiit und sauerstoffabspaltenden Salzen, dadurch gekennzeichnet, daß man 1 Mol Natronwasserglas, welches ein molares Verhältnis von SiO₂ : Na₂O = 1 : 0,25 bis 0,5 hat, mit 0,1 bis 0,9 Mol einer Peroxidsalz bildenden Verbindung, welche in molarer wäßriger Konzentration einen pH-Wert von kleiner als 10,5 hat, als Neutralisationsmittel vermischt und in Gegenwart von Magadiit-Impfkristallen bei Temperaturen von 373 bis 523 K, insbesondere 423 bis 463 K im Autoklaven 1 bis 15 Stunden lang erhitzt und nach dem Abkühlen 0,15 bis 1,5 Mol Wasserstoffperoxid, bezogen auf 1 Mol eingesetztes Natronwasserglas, zugibt und aus der Reaktionssuspension den Feststoff und die gelösten Stoffe als Trockensubstanz isoliert.

2. Verfahren nach Anspruch 1, dadurch gekennzeichnet, daß man als Neutralisationsmittel Peroxidsalze bildende Verbindungen wie Phosphorsäure, Borsäure, Kieselsäure, Kohlendioxid, Alkalihydrogencarbonat, Alkalihydrogenphosphat oder Natriumtetraborat verwendet.

3. Verfahren nach einem der Ansprüche 1 oder 2, dadurch gekennzeichnet, daß man die Menge an Neutralisationsmittel so dosiert, daß in der Reaktionslösung ein Verhältnis von SiO₂ : Na₂O = 4 bis 15 : 1 vorliegt.

4. Verfahren nach einem der Ansprüche 1 bis 3, dadurch gekennzeichnet, daß man das Wasserstoffperoxid in Form einer 5 bis 75 gewichts%igen wäßrigen Lösung zugibt.

5. Verfahren nach einem der Ansprüche 1 bis 4, dadurch gekennzeichnet, daß man 0,5 bis 10 Gew% Impfkristalle, bezogen auf den SiO₂-Gewichtsanteil im Natronwasserglas, zugibt.

6. Verfahren nach einen der Ansprüche 1 bis 5, dadurch gekennzeichnet, daß man die Umsetzung im Autoklaven bei einem molaren Verhältnis von SiO₂ : H₂O = 1 : (5 bis 100) durchführt.

7. Verfahren nach einem der Ansprüche 1 bis 6, dadurch gekennzeichnet, daß man die Reaktion in Gegenwart von Aluminium-, Phosphor-, Bor- und/oder Schwermetall-Verbindungen wie beispielsweise Eisen durchführt.

8. Verfahren nach einem der Ansprüche 1 bis 7, dadurch gekennzeichnet, daß man die Reaktionsmischung vor dem Erhitzen auf einen pH-Wert von 9 bis 12 einstellt.

9. Verfahren nach einem der Ansprüche 1 bis 8, dadurch gekennzeichnet, daß man die Reaktion kontinuierlich durchführt.

10. Verfahren nach Anspruch 9, dadurch gekennzeichnet, daß man bei der kontinuierlichen Arbeitsweise 5 bis 30 Gew% Impfkristalle, bezogen auf den SiO₂-Gewichtsanteil im Natronwasserglas, zugibt.

11. Verfahren nach einem der Ansprüche 1 bis 10, dadurch gekennzeichnet, daß man der Reaktionssuspension peroxidstabilisierende Verbindungen wie beispielsweise Magnesiumsilikat, Etyhlendiamintetraessigsäure, Tripolyphosphor-, Pyrophosphor- oder Orthophosphorsäure jeweils in Form ihrer Natriumsalze zugibt.

12. Verfahren nach einem der Ansprüche 1 bis 11, dadurch gekennzeichnet, daß man den Feststoff und die in der Reaktionssuspension gelösten Stoffe durch eine Unterdruckverdampfung als Trockensubstanz isoliert.

13. Verfahren nach einem der Ansprüche 1 bis 11, dadurch gekennzeichnet, daß man die Reaktionssuspension mit einem erwärmten Gasstrom bei einer Feststofftemperatur zwischen 3o3 und 363 K beispielsweise in einem Wirbelbetttrockner, Trommeltrockner, Sprühtrockner oder Cranulator als Trockensubstanz isoliert.

14. Verfahren nach einem der Ansprüche 1 bis 11, dadurch gekennzeichnet, daß man die Reaktionssuspension in einen Filterkuchen und Filtrat trennt und getrennt trocknet und die erhaltenen Trockenstoffe miteinander vermischt.

15. Verfahren nach Anspruch 14, dadurch gekennzeichnet, daß man einen Teil des Wasserstoffperoxids dem Filtrat zusetzt, zur Trockne eindampft und in zerkleinerter Form mit dem getrockneten Filterkuchen vereinigt.

16. Verfahren nach einem der Ansprüche 1 bis 13, dadurch gekennzeichnet, daß man 1 Mol Natronwasserglas, welches ein molares Verhältnis von SiO₂ : Na₂O = 1 : (o,25 bis o,5) hat, mit o,1 bis o,9 Mol einer Verbindung, welche in molarer wäßriger Konzentration einen pH-Wert von kleiner als 10,5 hat, als Neutralisationsmittel vermischt und in Gegenwart von Magadiit-Impfkristallen bei Temperaturen von 373 bis 523 K, insbesondere 423 bis 463 K, im Autoklaven 1 bis 15 Stunden lang erhitzt und, in Abänderung des Patentanspruchs 1, die Trockensubstanz isoliert und zu dieser Trockensubstanz 0,15 bis 1,5 Mol Wasserstoffperoxid, bezogen auf 1 Mol eingesetztes Natronwasserglas, zugibt.

## Claims

1. A process for the preparation of a mixture of synthetic, crystalline magadiite and salts which split off oxygen, which comprises mixing 1 mol of soda-waterglass which has a molar ratio of SiO₂ : Na₂O = 1 : 0.25 to 0.5 with 0.1 to 0.9 mol of a peroxide-salt-forming compound which has a pH of less than 10.5 in molar aqueous concentration, as neutralizing agent, heating the mixture at temperatures of 373 to 523 K, in particular 423 to 463 K in an autoclave for 1 to 15 hours in the presence of magadiite seed crystals and, after cooling, adding 0.15 to 1.5 mole of hydrogen peroxide per mole of soda-waterglass employed and isolating the solid and the dissolved substances from the reaction suspension as dry substance.

2. The process as claimed in claim 1, wherein peroxide-salt-forming compounds such as phosphoric acid, boric acid, silicic acid, carbon dioxide, alkali metal hydrogencarbonate, alkali metal hydrogen phosphate or sodium tetraborate are used as the neutralizing agent.

3. The process as claimed in either of claims 1 or 2, wherein the amount of neutralizing agent is metered in such that a ratio of SiO₂ : Na₂O = 4 to 15 : 1 is present in the reaction solution.

4. The process as claimed in any one of claims 1 to 3, wherein the hydrogen peroxide is added in the form of a 5 to 75 % by weight aqueous solution.

5. The process as claimed in any one of claims 1 to 4, wherein 0.5 to 10 % by weight of seed crystals, based on the SiO₂ weight content in the soda-waterglass, is added.

6. The process as claimed in any one of claims 1 to 5, wherein the reaction is carried out in an autoclave at a molar ratio of SiO₂ : H₂O = 1 : (5 to 100).

7. The process as claimed in any one of claims 1 to 6, wherein the reaction is carried out in the presence of aluminum, phosphorus, boron and/or heavy metal compounds, such as, for example, iron.

8. The process as claimed in any one of claims 1 to 7, wherein the reaction mixture is brought to a pH of 9 to 12 before heating.

9. The process as claimed in any one of claims 1 to 8, wherein the reaction is carried out continuously.

10. The process as claimed in claim 9, wherein, in the continuous procedure, 5 to 30 % by weight of seed crystals, based on the SiO₂ weight content in the soda-waterglass, are added.

11. The process as claimed in any one of claims 1 to 10, wherein peroxidestabilizing compounds such as, for example, magnesium silicate, ethylenediaminetetraacetic acid and tripolyphosphoric, pyrophosphoric or orthophosphoric acid, in each case in the form of their sodium salts, are added to the reaction suspension.

12. The process as claimed in any one of claims 1 to 11, wherein the solid and the substances dissolved in the reaction suspension are isolated as the dry substance by vacuum evaporation.

13. The process as claimed in any one of claims 1 to 11, wherein the reaction suspension is isolated as dry substance with a heated stream of gas at a solids temperature of between 303 and 363 K for example in a fluidized bed drier, drum drier, spray drier or granulator.

14. The process as claimed in any one of claims 1 to 11, wherein the reaction suspension is separated into a filtercake and filtrate, which are dried separately, and the resulting dry substances are mixed with one another.

15. The process as claimed in claim 14, wherein some of the hydrogen peroxide is added to the filtrate, the mixture is evaporated to dryness and the residue is combined in comminuted form with the dried filtercake.

16. The process as claimed in any one of claims 1 to 13, wherein 1 mol of soda-water glass which has a molar ratio of SiO₂ : Na₂O = 1 : (0.25 to 0.5) is mixed with 0.1 to 0.9 mol of a compound which has a pH of less than 10.5 in molar aqueous concentration, as neutralizing agent, the mixture is heated at temperatures of 373 to 523 K, in particular 423 to 463 K, in an autoclave for 1 to 15 hours in the presence of magadiite seed crystals and, in a modification of patent claim 1, the dry substance is isolated and 0.15 to 1.5 mol of hydrogen peroxide per mole of soda-waterglass employed are added to this dry substance.

## Revendications

1. Procédé de prépartion de mélanges de magadiite cristalline synthétique et de sels émettant de l'oxygène, caractérisé en ce qu'on mélange 1 mol de silicate de soude, qui a un rapport molaire de SiO₂:Na₂O = 1 : 0,25 à 0,5, avec 0,1 à 0,9 mol d'un composé formant un sel peroxyde, qui, à une concentration aqueuse molaire, a un pH inférieur à 10,5, comme agent de neutralisation et on chauffe en présence de cristaux d'ensemencement de magadiite à des températures de 373 à 523 K, notamment 423 à 463 K dans l'autoclave pendant 1 à 15 h et après le refroidissement, on ajoute 0,15 à 1,5 mol de peroxyde d'hydrogène par rapport à 1 mol du silicate de soude utilisé, et on isole le solide de la suspension de réaction et les substances dissoutes sous forme de substances sèches.

2. Procédé selon la revendication 1, caractérisé en ce qu'on utilise comme agents de neutralisation des composés formant des sels peroxyde comme l'acide phosphorique, l'acide borique, l'acide silicique, le dioxyde de carbone, un hydrogénocarbonate alcalin, un hydrogénophosphate alcalin ou du tétraborate de sodium.

3. Procédé selon l'un des revendications 1 ou 2, caractérisé en ce qu'on dose la quantité d'agent de neutralisation, de sorte que dans la solution de réaction, il existe un rapport de SiO2:Na₂O à 4 à 15:1.

4. Procédé selon l'une des revendications 1 à 3, caractérisé en ce qu'on ajoute le peroxyde d'hydrogène sous forme d'une solution aqueuse de 5 à 75 % en poids.

5. Procédé selon l'une des revendications 1 à 4, caractérisé en ce qu'on ajoute 0,5 à 10 % en poids de cristaux d'ensemencement par rapport à la teneur pondérale de SiO₂ dans le silicate de soude.

6. Procédé selon l'une des revendications 1 à 5, caractérisé en ce qu'on réalise la réaction à l'autoclave avec un rapport molaire de SiO₂:H₂O = 1:(5 à 100).

7. Procédé selon l'une des revendications 1 à 6, caractérisé en ce qu'on réalise la réaction en présence de composés d'aluminium, de phosphore, de bore et/ou de métaux lourds, comme par exemple le fer.

8. Procédé selon l'une des revendications 1 à 7, caractérisé en ce qu'on ajuste le mélange réactionnel avant le chauffage à un pH de 9 à 12.

9. Procédé selon l'une des revendications 1 à 8, caractérisé en ce qu'on réalise la réaction en continu.

10. Procédé selon la revendication 9, caractérisé en ce qu'on ajoute lors du mode de travail en continu 5 à 30 % en poids de cristaux d'ensemencement, par rapport à la teneur en poids de SiO₂ dans le silicate de soude.

11. Procédé selon l'une des revendications 1 à 10, caractérisé en ce qu'on ajoute à la suspension réactionnelle des composés stabilisants de peroxyde comme par exemple du silicate de magnésium, de l'acide éthylènediaminetétra-acétique, de l'acide tripolyphosphorique, de l'acide pyrophosphorique ou de l'acide orthophosphorique respectivement sous forme de leurs sels de sodium.

12. Procédé selon l'une des revendications 1 à 11, caractérisé en ce qu'on isole le solide et les substances dissoutes dans la suspension réactionnelle par évaporation sous pression réduite sous forme de substance sèche.

13. Procédé selon l'une des revendications 1 à 11, caractérisé en ce qu'on traite la suspension réactionnelle avec un courant de gaz chauffé pour une température de solide comprise entre 303 et 363 K par exemple dans un sécheur à lit fluidisé, un sécheur à tambour, un sécheur à pulvérisation ou un granulateur pour isoler la substance sèche.

14. Procédé selon l'une des revendications 1 à 11, caractérisé en ce qu'on sépare la suspension réactionnelle en un gâteau de filtre et un filtrat et on sèche séparément et on mélange les substances sèches obtenues.

15. Procédé selon la revendication 14, caractérisé en ce qu'on ajoute une partie du peroxyde d'hydrogène au filtrat, on évapore à sec et on mélange sous forme pulvérisée avec le gâteau de filtre séché.

16. Procédé selon l'une des revendications 1 à 13, caractérisé en ce qu'on mélange 1 mol de silicate de soude, qui a un rapport molaire de SiO₂:Na₂O = 1 : (0,25 à 0,5), avec 0,1 à 0,9 mol d'un composé, qui, à une concentration aqueuse molaire, a un pH inférieur à 10,5, comme agent de neutralisation et on chauffe en présence de cristaux d'ensemencement de magadiite à des températures de 373 à 523 K, notamment 423 à 463 K dans l'autoclave pendant 1 à 15 h et, à la différence de la revendication 1, on isole la substance sèche et on ajoute à cette substance sèche 0,15 à 1,5 mol de peroxyde d'hydrogène, par rapport à 1 mol de silicate de soude utilisé.
